(19) Europäisches Patentamt
European Patent Office
Office européen des brevets

(11) **EP 3 974 860 A1**

(12) **EUROPEAN PATENT APPLICATION**
published in accordance with Art. 153(4) EPC

(43) Date of publication:
**30.03.2022 Bulletin 2022/13**

(21) Application number: **20809978.8**

(22) Date of filing: **15.05.2020**

(51) International Patent Classification (IPC):
*G01S 7/02* (2006.01)    *G01S 7/03* (2006.01)
*G08G 1/16* (2006.01)    *H01Q 21/06* (2006.01)

(52) Cooperative Patent Classification (CPC):
**G01S 7/02; G01S 7/03; G08G 1/16; H01Q 21/06**

(86) International application number:
**PCT/JP2020/019400**

(87) International publication number:
**WO 2020/235463 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.05.2019 JP 2019096930**

(71) Applicant: **Hitachi Astemo, Ltd.
Ibaraki 312-8503 (JP)**

(72) Inventors:
• **SHIMADA, Kenichi
  Hitachinaka-shi, Ibaraki 312-8503 (JP)**
• **OSAKA, Hideki
  Hitachinaka-shi, Ibaraki 312-8503 (JP)**
• **KURODA, Hiroshi
  Hitachinaka-shi, Ibaraki 312-8503 (JP)**
• **SASAKI, Satoshi
  Hitachinaka-shi, Ibaraki 312-8503 (JP)**

(74) Representative: **MERH-IP Matias Erny Reichl Hoffmann
Patentanwälte PartG mbB
Paul-Heyse-Strasse 29
80336 München (DE)**

(54) **RADAR DEVICE**

(57)    A radar device includes: an antenna array including a plurality of antenna elements; and a signal processing unit calculating an arrival angle of a reflection wave reflected by a detection target using reception signals of the plurality of antenna elements. The plurality of antenna elements are disposed on a first plane including a first direction. At least one of the plurality of antenna elements is disposed at a position different from the other antenna elements in a second direction orthogonal to the first direction. The signal processing unit arranges the reception signals of the plurality of antenna elements in order of positions of the plurality of antenna elements in the first direction to perform vectorization, and calculates a component of the arrival angle in the first direction.

FIG. 5

EP 3 974 860 A1

**Description**

Technical Field

The present invention relates to a radar device.

Background Art

A millimeter wave, which is a radio wave having a frequency of 30 GHz to 300 GHz, is a frequency band close to light among radio waves, has high straightness and has a property excellent in environmental resistance, specifically, rain, fog, snow, dirt, and the like. A millimeter wave radar to which this property is applie'd as a sensor can measure a distance and a speed to a distant object and an azimuth angle of the object, and is employed as a main sensor of an autonomous vehicle and a leading-edge driving assistance system. Note that a millimeter wave radar used for forward monitoring of a vehicle is required to have a longer detection distance in order to cope with detection of a preceding vehicle and an obstacle on a highway, and the detectable distance has reached about 300 m recently.

In order to enable such long distance detection, a high-gain transmission antenna and reception antenna are required. Since an antenna gain is proportional to an antenna opening area, a size of an antenna used for a long-range radar is generally larger than that of a mid-range radar. Here, a radar estimates an azimuth angle from a phase difference between reception antennas with respect to signals received by the reception antennas when obtaining the azimuth angle of an object. Thus, when the phase difference becomes 2n, there occurs a problem that it is difficult to uniquely determine the azimuth angle. In order to prevent erroneous detection due to such phase folding, it is conceivable to set an interval between the reception antennas to be narrowed to about a half wavelength such that the phase difference between the reception antennas does not become 2n. However, it is difficult to cope with long distance detection of about 300 m, for example if the antenna gain is narrowed to about the half wavelength since the antenna gain is proportional to the antenna opening area as described above.

PTL 1 discloses an apparatus for detecting a direction that includes a plurality of at least one of transmission antennas and reception antennas, transmits and receives a radio wave for each channel formed by combining the transmission and reception antennas, and detects a direction of a target reflecting the radio wave based on a phase difference in reception signals received in the respective channels. The apparatus for detecting a direction includes: a direction calculating device calculating the direction of the target based on the phase difference in the reception signals on the assumption that the phase difference is within a range of -n to +n [rad]; a range determining device determining that the target currently exists in one of a plurality of azimuthal angle ranges respectively corresponding to ranges of the phase difference between $(2m - 1)\pi$ to $(2m + 1)\pi$ [rad] (where m is an integer); and a correcting device correcting the direction calculated by the direction calculating device according to a result determined by the range determining device.

Citation List

Patent Literature

PTL 1: JP 2004-170371 A

Summary of Invention

Technical Problem

In the invention described in PTL 1, there is room for improvement in the arrangement of antenna elements and a method of using the reception signal.

Solution to Problem

A radar device according to a first aspect of the present invention includes: an antenna array including a plurality of antenna elements; and a signal processing unit calculating an arrival angle of a reflection wave reflected by a detection target using reception signals of the plurality of antenna elements. The plurality of antenna elements are disposed on a first plane including a first direction. At least one of the plurality of antenna elements is disposed at a position different from the other antenna elements in a second direction orthogonal to the first direction. The signal processing unit arranges the reception signals of the plurality of antenna elements in order of positions of the plurality of antenna elements in the first direction to perform vectorization, and calculates a component of the arrival angle in the first direction.

Advantageous Effects of Invention

According to the present invention, a detectable visual field range of the radar device can be expanded. Other objects, configurations, and effects which have not been described above will become apparent from embodiments to be described hereinafter.

Brief Description of Drawings

[FIG. 1] FIG. 1 is a schematic diagram of a radar device.
[FIG. 2] FIG. 2 is a view illustrating an arrangement of antenna elements according to a first embodiment.
[FIG. 3] FIG. 3 is a view illustrating a positional relationship between the radar device and a detection target according to the first embodiment.
[FIG. 4] FIG. 4 is a table illustrating a correspondence between a reception signal used for calculation and a reference sign of the antenna element.
[FIG. 5] FIG. 5 is a schematic view illustrating a relationship between the arrangement of the antenna elements on a substrate and an arrangement of virtual antenna elements on calculation in a signal processing unit according to the first embodiment.
[FIG. 6] FIG. 6 is a flowchart illustrating processing of the signal processing unit according to the first embodiment.
[FIG. 7] FIG. 7 is a flowchart illustrating processing of a signal processing unit according to a second embodiment.
[FIG. 8] FIG. 8 is a view illustrating a definition of an oblique axis according to the second embodiment.
[FIG. 9] FIG. 9 is a view illustrating a positional relationship between a radar device and a detection target according to the second'embodiment.
[FIG. 10] FIG. 10 is a conceptual view illustrating phase difference correction.
[FIG. 11] FIG. 11 is a view illustrating an arrangement of antenna elements according to a third embodiment.
[FIG. 12] FIG. 12 is a schematic view illustrating a relationship between the arrangement of the antenna elements on a substrate and an arrangement of virtual antenna elements on calculation in a signal processing unit according to the third embodiment.
[FIG. 13] FIG. 13 is a view illustrating a definition of an oblique axis according to the third embodiment.
[FIG. 14] FIG. 14 is a view illustrating an arrangement of antenna elements according to a fourth embodiment.
[FIG. 15] FIG. 15 is a view illustrating an arrangement of antenna elements according to a fifth embodiment.

Description of Embodiments

-First Embodiment-

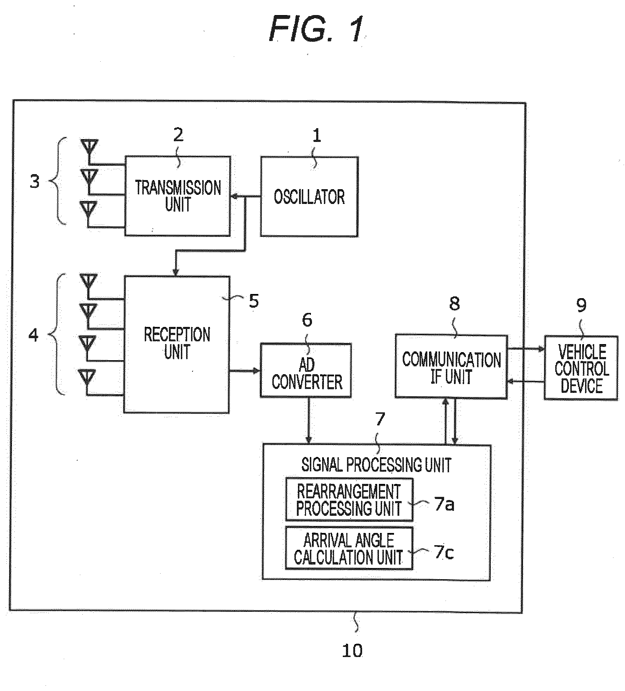

Hereinafter, a first embodiment of a radar device will be described with reference to FIGS. 1 to 6.

(Configuration)

FIG. 1 is a schematic diagram of a radar device 10. The radar device 10 includes an oscillator 1, a transmission unit 2, a transmission antenna 3, a reception antenna 4, a reception unit 5, an AD converter 6, a signal processing unit 7, and a communication IF unit 8. The radar device 10 is connected to a vehicle control device 9 separately provided in a vehicle.

The oscillator 1 generates a frequency-modulated modulation signal and supplies the modulation signal to the transmission unit 2 and the reception unit 5. As the oscillator 1, for example, a phase-locked loop (PLL) including a voltage-controlled oscillator (VCO), a multiplier, and the like is used. When detecting an object in the periphery of the vehicle, the transmission unit 2 outputs a frequency-modulated transmission signal to the transmission antenna 3 by performing power amplification of the modulation signal from the oscillator 1. The transmission signal is radiated as a radio wave toward the periphery of the vehicle, for example, the front of the vehicle via the transmission antenna 3.

In order to detect the object in the periphery of the vehicle, the reception unit 5 receives a signal obtained as the transmission signal radiated from the transmission unit 2 via the.transmission antenna 3 is reflected by the object in the periphery of the vehicle and input to the reception antenna 4. Note that the reception antenna 4 includes a plurality of antenna elements as will be described later, the reception antenna 4 can also be referred to as an "antenna array". Then, the reception unit 5 mixes a reception signal with the modulation signal from the oscillator 1 to generate a beat signal according to a frequency difference between these signals, and performs frequency down conversion. The generated beat signal becomes digital data subjected to A/D conversion by the AD converter 6 after an unnecessary frequency has been cut through a band-limiting filter, and the signal processing unit 7 performs signal processing to calculate a distance to an object in the periphery of the vehicle, a speed, and an arrival angle. Results of the calculation of the signal processing unit 7 are transmitted to the vehicle control device 9 through the communication IF unit 8.

The signal processing unit 7 includes a CPU that is a central processing unit, a ROM that is a read-only storage device, and a RAM that is a readable/writable storage device. The CPU develops and executes a program stored in the ROM on the RAM to implement a plurality of functions to be described later. However, the signal processing unit 7 may be realized by a field programmable gate array (FPGA) which is a rewritable logic circuit or an application specific integrated circuit (ASIC), which is an integrated circuit for a specific application, instead of the combination of the CPU, the ROM, and the RAM. In addition, the signal processing unit 7 may be realized by a combination of different configurations, for example, a combination of a CPU, a ROM, a RAM, and an FPGA, instead of the combination of the CPU, the ROM, and the RAM.

The signal processing unit 7 includes a rearrangement processing unit 7a and an arrival angle calculation unit 7c as its functions. The respective functions will be described later. Note that the configuration of the radar device 10 described in FIG. 1 is merely an example, and for example, the number of antenna elements of the transmission antenna 3 and the reception antenna 4 is not limited to that in the configuration illustrated in FIG. 1.

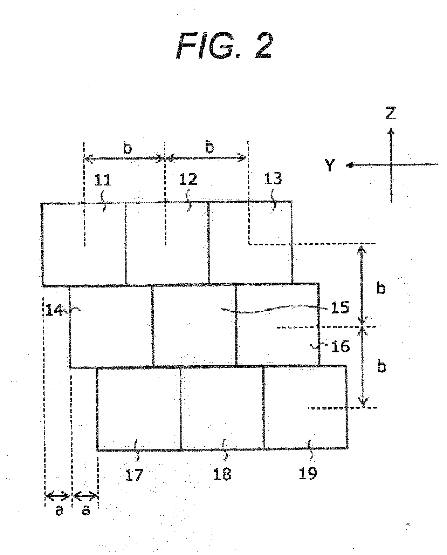

FIG. 2 is a view illustrating details of the reception antenna 4, and illustrates a specific arrangement of antenna elements constituting the reception antenna 4. Assuming that the horizontal direction and the vertical direction in FIG. 2 are a Y direction and a Z direction, respectively, all the antenna elements constituting the reception antenna 4 are disposed on the same YZ plane in the present embodiment.

Hereinafter, the Y direction and the Z direction will be also referred to as the "horizontal direction" and the "vertical direction", respectively.

In FIG. 2, reference signs 11 to 19 indicated by rectangles represent regions of the respective antenna elements, and one rectangle represents one antenna element. Sets of the antenna elements 11, 12, and 13 are arranged at an antenna interval b in the Y direction, and similarly, sets of the antenna elements 14, 15, and 16 and sets of the antenna elements 17, 18, and 19 are also arranged at the antenna interval b in the Y direction. In the present embodiment, the respective sets arranged at different positions in the Z direction are arranged to be offset by an amount a shorter than the interval b in the Y direction. However, b is three times as large as a in the present embodiment.

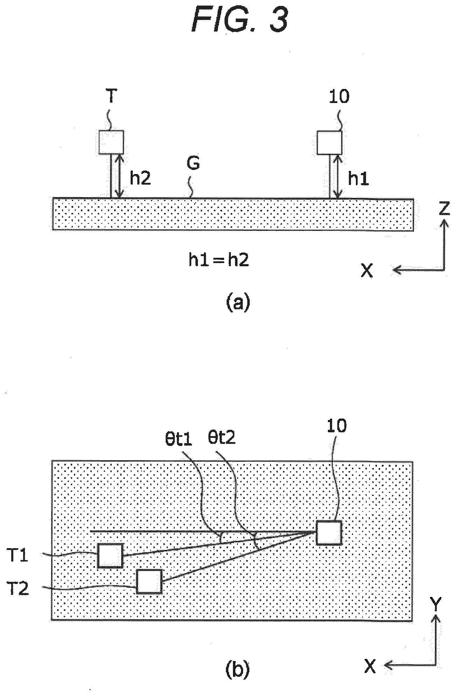

FIG. 3 is a view illustrating a positional relationship between the radar device 10 and a detection target T assumed in the present embodiment. FIG. 3(a) is a view of the radar device 10 and the detection target T as viewed from the side, and FIG. 3(b) is a view of the radar device 10 and the detection target T as viewed from the side. Note that FIG. 3(b) illustrates two detection targets T1 and T2 for exemplifying an angle.

As illustrated in FIG. 3(a), the detection target T and the radar device 10 exist approximately apart from each other in an X-axis direction. In the present embodiment, a height h1 from a ground G to the radar device 10 and a height h2 from the ground G to the detection target T are the same. In addition, an angle $\theta$ to the detection target is defined as illustrated in FIG. 3(b). The angle $\theta$ is zero if the detection target T exists on an X axis which is the front of the radar device 10. However, the angle $\theta$ will be also referred to as an arrival angle $\theta$ hereinafter from the meaning of calculating an arrival angle of a radio wave reflected by the detection target.

It is assumed that the detection target T exists in the same XY plane as the radar device 10 as described above in the present embodiment, and the signal processing unit 7 uses signals received by the antenna elements of the reception antenna 4 in the order of installation positions in the Y-axis direction when calculating the arrival angle $\theta$. Specifically, when a beamformer method, for example, is used to calculate the arrival angle $\theta$, an input vector X in Formula 1 is assumed as reception signals of antenna elements according to the order of the installation positions in the Y-axis direction. At this time, the antenna elements may be numbered in advance in the order of the installation positions in the Y-axis direction, or the number of the antenna elements may be freely set to rearrange the signals in the order of the installation positions in the Y-axis direction. The latter is adopted in the present embodiment.

[Formula 1]

$$X = [x_1, x_2, x_3, \cdots, x_9]^T \quad \bullet\bullet\bullet \quad \text{Formula 1}$$

Note that the input vector X is constituted by nine elements in Formula 1 since nine antenna elements are provided as illustrated in FIG. 2. The number of elements of the input vector X changes according to the number of antenna elements.

As illustrated in FIG. 2, the antenna elements are arranged on the YZ plane, and the installation position of each of the antenna elements is determined by a Y coordinate value and a Z coordinate value in the present embodiment. In the present embodiment, antenna elements having the same Z coordinate value are grouped, and numbers are assigned to the groups in descending order of the Y coordinate values. Specifically, reference signs 11, 12, and 13 are assigned from left to right in the upper part of FIG. 2, reference signs 14, 15, and 16 are assigned from left to right in the middle part, and reference signs 17, 18, and 19 are assigned from left to right in the lower part. The reception signals of these antenna elements are rearranged as follows and used for calculation.

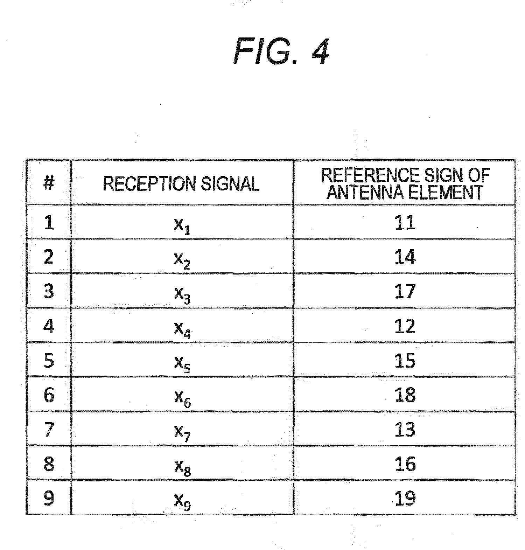

FIG. 4 is a table illustrating a correspondence between a reception signal used for calculation and a reference sign of an antenna element. Here, x1 to x9 illustrated in the column of the reception signal in FIG. 4 are described in Formula 1. In the beamformer method, a peak position of an angle spectrum $P_{BF}(\theta)$ expressed by Formula 2 is calculated as the arrival angle using the input vector X.

[Formula 2]

$$P_{BF}(\theta) = \frac{a^H(\theta)R_{xx}a(\theta)}{a^H(\theta)a(\theta)} \quad \cdots \quad \text{Formula 2}$$

In Formula 2, a superscript H represents a complex conjugate transposition. Here, $a(\theta)$ and Rxx are a mode vector and a correlation function of an input vector, respectively, and are expressed by Formula 3 and Formula 4, respectively.

[Formula 3]

$$a(\theta) \equiv \left[ exp\left(-j\frac{2\pi}{\lambda}d_1 \sin\theta\right), \dots, exp\left(-j\frac{2\pi}{\lambda}d_k \sin\theta\right)\right]^T$$

$$\cdots \quad \text{Formula 3}$$

[Formula 4]

$$R_{xx} = \mathrm{E}[XX^H] \quad \cdots \quad \text{Formula 4}$$

Note that $\lambda$ in Formula 3 is a wavelength, and $d_1$ to $d_k$ are intervals in antenna elements in the Y-axis direction. For example, when a relationship between a and b in FIG. 2 is 3a = b, $d_1$ to $d_k$ are all "a". In addition, a superscript H in Formula 4 represents a complex conjugate transposition, and an operator E[ ] represents an average operation.

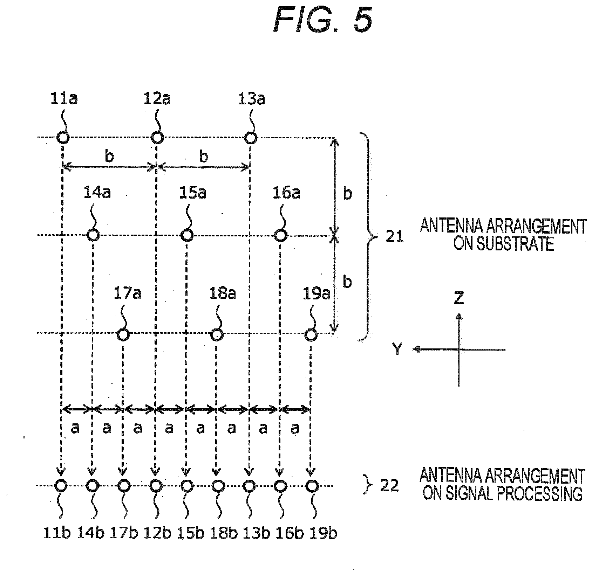

FIG. 5 is a schematic view illustrating a relationship between an arrangement 21 of each antenna element of the reception antenna 4 on a substrate and an arrangement 22 of each virtual antenna element on calculation in the signal processing unit 7. Reference signs 11a to 19a indicate center positions of the antenna elements 11 to 19 illustrated in FIG. 2. The respective antenna elements are actually arranged as described above with reference to FIG. 2. However, the signal processing unit 7 treats positions of the antenna elements indicated by reference signs 11a to 19a as the arrangement order in which the antenna elements are arranged in a line in the horizontal direction as indicated by reference signs 11b to 19b, and calculates the arrival angle $\theta$. That is, an effect of virtually narrowing the antenna interval is produced by rearranging the respective antenna elements so as to minimize the antenna interval in the horizontal direction.

This rearrangement is executed by the rearrangement processing unit 7a of the signal processing unit 7. For example, the rearrangement processing unit 7a may read information illustrated in FIG. 4 from the ROM and perform processing, or may operate a hardware circuit reflecting the information illustrated in FIG. 4.

The arrival angle calculation unit 7c can obtain an effect equivalent to the interval a in which the interval between the reception antenna elements is narrower than the actual antenna interval b by using the input rearranged in the above arrangement order. Therefore, an angle is widened at which a phase difference between the reception antennas becomes 2n, that is, phase folding occurs, and a detectable visual field range of the radar can be expanded.

(Flowchart)

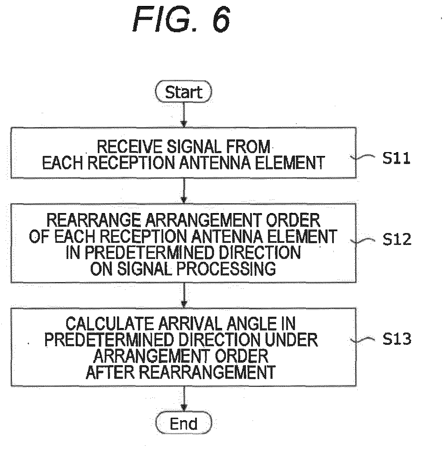

FIG. 6 is a flowchart illustrating processing of the signal processing unit 7 according to the first embodiment.

First, the signal processing unit 7 receives signals from the respective antenna elements of the reception antenna 4 (S11). Next, the rearrangement processing unit 7a of the signal processing unit 7 rearranges the arrangement order of the respective reception antenna elements in a predetermined direction based on signal processing (S12). Then, the arrival angle calculation unit 7c of the signal processing unit 7 calculates the arrival angle $\theta$ in the horizontal direction under the rearranged arrangement order (S13).

Note that the signal processing unit 7 may calculate a distance and a speed to a detection target before calculating the arrival angle $\theta$. The distance and speed can be obtained based on spectrum information of the reception signals by decomposing signals from the respective reception antenna elements of the reception antenna 4 into frequency components. The reception signal used for the arrival angle estimation may be a signal processed in the process of calculating the distance or the speed.

According to the above-described first embodiment, the following operational effects can be obtained.

(1) The radar device 10 includes the reception antenna 4 that is an antenna array having a plurality of antenna elements, and the signal processing unit 7 that calculates the arrival angle $\theta$ of a reflection wave reflected by a detection target using reception signals of the plurality of antenna elements. The plurality of antenna elements are arranged on the YZ plane including the Y-axis direction. The plurality of antenna elements indicated by reference sign 11 to 19 are divided into three groups of reference signs 11 to 13, reference signs 14 to 16, and reference signs 17 to 19, and the groups have different Z coordinates. Therefore, at least one of the plurality of antenna elements is disposed at a position different from the other antenna elements in the Z direction. The signal processing unit 7 arranges the reception signals of the plurality of antenna elements in the order of positions of the plurality of antenna elements in the Y direction to obtain a vector X as represented in Formula 1, and calculates a component of the arrival angle $\theta$ in a first direction. Therefore, an effect equivalent to the interval a in which the interval between the reception antenna elements is narrower than the actual antenna interval b can be obtained, the angle at which the phase folding occurs is widened, and the detectable visual field range of the radar device 10 can be widened.

(2) The signal processing unit 7 rearranges the order of the reception signals of the plurality of antenna elements to perform vectorization based on the correspondence table illustrated in FIG. 4. Therefore, it is possible to flexibly cope with software processing.

(3) The plurality of antenna elements included in the reception antenna 4 are classified into three groups. The antenna elements belonging to each of the groups are arranged at the interval b in the Y direction. The three groups have different positions in the Z direction. The three groups are disposed to be offset in the Y direction by a distance obtained by dividing the interval b by three, that is, a distance of "b/3 = a". Therefore, an interval between the Y coordinate values of the antenna elements is minimized and constant as illustrated in FIG. 5.

(First Modification)

In the first embodiment described above, the signal processing unit 7 generates the input vector X by switching the order of the reception signals by software processing. However, the signal processing unit 7 may realize this by a hardware configuration. That is, the rearrangement processing unit 7a is implemented by software in the first embodiment, but may be implemented by hardware. In addition, the hardware configuration corresponding to the rearrangement processing unit 7a may exist outside the signal processing unit 7. Various known means can be used for this hardware configuration. For example, a routing length of a signal line may be devised such that reception signals arrive at the arrival angle calculation unit 7c from antenna elements in the order illustrated in FIG. 4.

According to a first modification, the following operational effects can be obtained.

(4) The signal processing unit 7 generates the vector X by arranging the reception signals of the plurality of antenna elements in the order of the positions of the plurality of antenna elements in the Y direction by a hardware configuration generated in advance. Therefore, it is possible to obtain the same operational effect as those of the first embodiment without using software processing.

(Second Modification)

In the above-described embodiment, the number of groups arranged in the Z direction correlates with an offset amount for each group. However, the both are not necessarily correlated. For example, an offset amount a may be 1/10 of the antenna interval b regardless of the number of groups. In this case, an interval between reference signs 11b and 14b and an interval between reference signs 14b and 17b in FIG. 5 are still a, but an interval between reference signs 17b and 12b becomes 8a. In this case, an arrival angle can be calculated by appropriately setting a value of d in Formula 3.

-Second Embodiment-

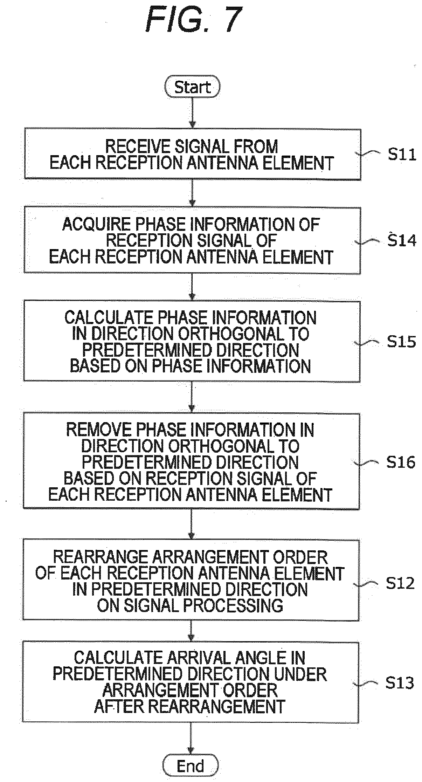

A radar device according to a second embodiment will be described with reference to FIGS. 7 to 10. In the following description, a difference will mainly be described by applying the same reference signs to the same constituent elements as those of the first embodiment. A point not specifically described is the same as that of the first embodiment. The present embodiment is different from the first embodiment mainly in terms of handling even a case where positions of the radar device and a detection target in a height direction are not the same. In other words, it is assumed in the first embodiment that h1 and h2 are equal as illustrated in FIG. 3, but the present embodiment also handles a case where h1 and h2 are not equal.

If only the technique described in the first embodiment is applied to the present embodiment, the following problem occurs. That is, antenna elements of the reception antennas 4 arranged at different positions in the Z direction regard a phase change derived from a component in the Z direction as a phase change in the horizontal direction, so that it is difficult to calculate the accurate arrival angle $\theta$. Therefore, a phase is corrected according to an arrangement of the antenna elements in the Z direction as will be described hereinafter.

FIG. 7 is a flowchart illustrating processing of the signal processing unit 7 according to the second embodiment.

In FIG. 7, S14 to S16 are added between S11 and S12 of the flowchart illustrated in FIG. 6 in the first embodiment. Here, S14 to S16, which are added processes, will be described. In S14, the signal processing unit 7 acquires phase information of a reception signal of each reception antenna element (S14). Next, in S15, the signal processing unit 7 calculates phase information in the Z direction orthogonal to the Y direction based on the acquired phase information (S15). Then, in S16, the signal processing unit 7 removes the phase information in the Z direction from the reception signal.

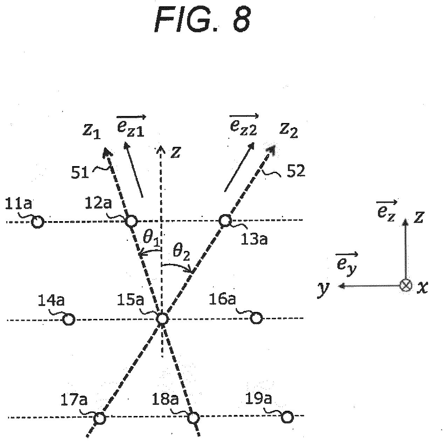

An example of a method for calculating the phase information in the Z direction, which is the process of S15, will be described hereinafter with reference to FIG. 8 and a formula.

FIG. 8 is a view illustrating a definition of an oblique axis. In the present embodiment, two axes 51 and 52 corresponding to arrangements of antenna elements of the reception antenna 4 are introduced as illustrated in FIG. 8. Since these axes are oblique to the Y axis in the horizontal direction and the Z axis in the vertical direction, the axes are newly defined as oblique axes 51 and 52, and names of the axes are z1 and z2, respectively. The oblique axis 51 has a direction of the axis determined from antenna elements 12a, 15a, and 18a, and has an inclination $\theta 1$ with respect to the Z axis in the vertical direction. The oblique axis 52 has a direction of the axis determined from antenna elements 13a, 15a, and 17a, and has an inclination $\theta 2$ with respect to the Z axis in the vertical direction. In the following description, unit vectors in the Y axis, the Z axis, the z1 axis, and the z2 axis are expressed as in Formula 5.

[Formula 5]

$$\vec{e_y},\ \vec{e_z},\ \vec{e_{z1}},\ \vec{e_{z2}} \qquad \bullet\bullet\bullet \ \text{Formula 5}$$

Note that the oblique axes are not limited to these, and may be straight lines which pass through two or more antenna elements and are not parallel to the Y axis or the Z axis. For example, an axis passing through the antenna elements 13a and 18a may also be set as an oblique axis, instead of the axis 52.

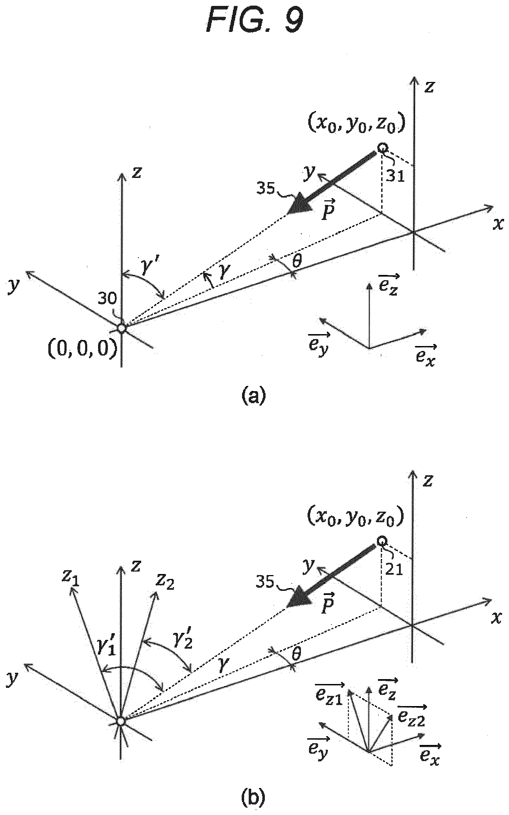

FIG. 9 is a view illustrating a positional relationship between the radar device 10 and the detection target T according to the second embodiment. Specifically, FIG. 9 is a schematic view illustrating each positional relationship assuming that a center position of the radar device 10 is an origin 30, a coordinate position 31 of an object as the detection target is (x0, y0, z0), and an arrival angle vector 35 of a reflection wave of a radio wave, transmitted from the radar device and reflected by the object to be directed to the radar device, is a vector P. The arrival angle vector P can be expressed as in Formula 6 using unit vectors of the x, y, and z axes.

[Formula 6]

$$\vec{P} = p_x \cdot \vec{e_x} + p_y \cdot \vec{e_y} + p_z \cdot \vec{e_z} \qquad \bullet\bullet\bullet \ \text{Formula 6}$$

Note that px, py, and pz in Formula 6 are direction cosines with respect to the X axis, the Y axis, and the Z axis, and for example, the direction cosine pz in the z direction can be expressed by the following Formula 7 using angles $\gamma$ and $\gamma'$ illustrated in FIG. 9.

. [Formula 7]

$$p_z = \cos\gamma' = \cos\left(90^\circ - \gamma\right) \qquad \bullet\bullet\bullet \ \text{Formula 7}$$

Note that Formula 6 is expressed using the direction cosines with respect to the x, y, and z axes, but may be also expressed using direction cosines with respect to the oblique axis z1 or z2. A relational expression with the direction cosines with respect to the y axis and the z axis described above is illustrated in Formula 8.

[Formula 8]

$$p_{zi}{'} = \sin \theta_i \cdot p_y + \cos \theta_i \cdot p_z \qquad \cdots \text{Formula 8}$$

$$i = 1 \, or \, 2$$

In Formula 8, pz1' is the direction cosine with respect to the oblique axis z1, and pz2' is the direction cosine with respect to the oblique axis z2. These direction cosines are expressed by Formula 9 using the angles γ1' and γ2' illustrated in FIG. 9.

[Formula 9]

$$p_{zi}^{'} = \cos \gamma_i^{'} \qquad \cdots \text{Formula 9}$$

Since Formula 10 is derived from Formula 8, the direction cosine pz is obtained by substituting known θ1 and θ2 into Formula 10 if the direction cosines pz1' and pz2' are obtained, and an azimuth angle γ in the vertical direction is obtained using Formula 7.

[Formula 10]

$$p_z = \frac{sin\theta_2 \cdot p_{z1}{'} - sin\theta_1 \cdot p_{z2}{'}}{sin(\theta_2 - \theta_1)} \qquad \cdots \text{Formula 10}$$

Note that the direction cosine pz1' is obtained by substituting a wavelength λ if a phase difference Δφ1 in a distance difference Δz1 on the axis 51 is obtained as illustrated in Formula 11. The phase difference Δφ1 can be obtained using, for example, a monopulse method which is a conventional technique if reception signals from two antenna elements on the axis 51 are used. The same applies to the direction cosine pz2'.

[Formula 11]

$$p_{zi}^{'} = \cos \left( 90^° - \sin^{-1} \frac{\Delta \phi_i \cdot \lambda}{2\pi \Delta z_i} \right) \qquad \cdots \text{Formula 11}$$

If the azimuth angle γ is obtained, a phase difference Δφz in the vertical direction is obtained by Formula 12.

[Formula 12]

$$\Delta \phi_z = \frac{2\pi \Delta z}{\lambda} \sin \gamma \qquad \cdots \text{Formula 12}$$

In Formula 12, Δz is a shift amount of a position of an antenna element in the Z direction. For example, in the case of the arrangement illustrated in FIG. 2, the shift amount Δz of the position of the antenna element in the Z direction between the antenna element 12a and the antenna element 15a is "b". The arrival angle can be correctly obtained by correcting a phase of a reception signal of each antenna element based on the phase difference Δφz even when the respective antenna elements are arranged in a line in the horizontal direction and the process of calculating the arrival angle in the horizontal direction is performed.

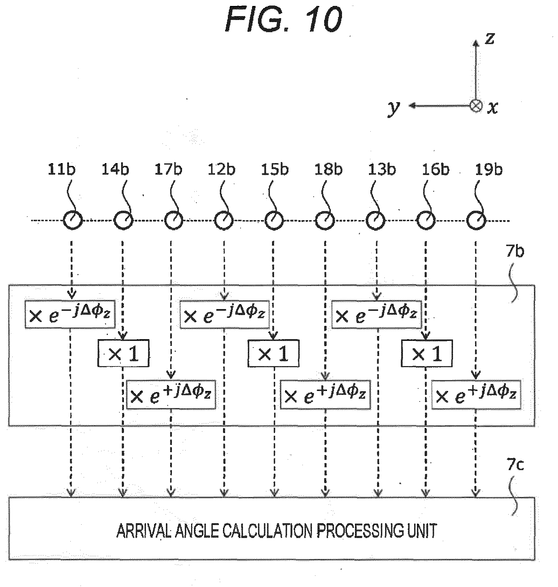

FIG. 10 is a conceptual view illustrating correction of the phase difference Δφz, which corresponds to a case where antenna elements are arranged as illustrated in FIGS. 2 and 5. For example, the antenna elements 14b, 15b, and 16b are used as a reference, and phase calculation illustrated in FIG. 10 is performed on reception signals from the remaining antenna elements by a phase difference correction unit 7b in the signal processing unit 7 as the phase in the vertical direction, and then, the arrival angle is calculated by the arrival angle calculation unit 7c.

According to the above-described second embodiment, the following operational effects can be obtained.

(5) The signal processing unit 7 calculates a phase difference based on a difference in arrangement positions of the plurality of antenna elements in any of the Z direction, a z1 direction, and a z2 direction, and corrects the reception signal using the phase difference. Therefore, the arrival angle can be accurately calculated even when the detection target and the radar device 10 have different heights and do not exist in the same XY plane.

-Third Embodiment-

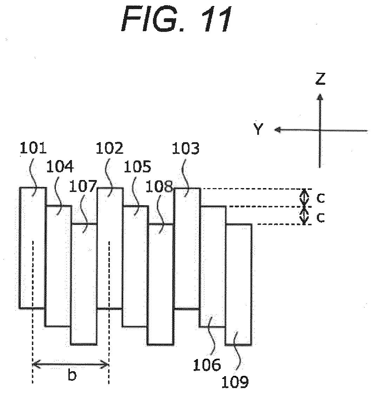

A radar device according to a third embodiment will be described with reference to FIGS. 11 to 13. In the following description, a difference will mainly be described by applying the same reference signs to the same constituent elements as those of the first embodiment. A point not specifically described is the same as that of the first embodiment. The present embodiment is different from the first and second embodiments mainly in terms of shapes and an arrangement of antenna elements.

In the first and second embodiments, the antenna element has a substantially square shape, and the antenna elements having the same Z coordinate are arranged in contact with each other in the Y direction. When an antenna element is elongated, however, the arrangement may be changed as in the present embodiment. Meanwhile, a calculation method of * * in the present embodiment is similar to that in the first and second embodiments. A reason why the calculation method is the same although the arrangement of the antenna elements is different from those of the first and second embodiments will be described later.

FIG. 11 is a view illustrating the arrangement of the antenna elements according to the third embodiment. Reference signs 101 to 109 indicated by rectangles represent regions of the respective antenna elements, and one rectangle represents one antenna element. Sets of the antenna elements 101, 102, and 103 are arranged at an antenna interval b in the horizontal direction. Similarly, sets of antenna elements 104, 105, and 106 and sets of antenna elements 107, 108, and 109 are also arranged at the antenna interval b in the horizontal direction. In the present embodiment, the sets arranged at different positions in the vertical direction - are arranged to be offset not only in the horizontal direction but also in the vertical direction. Note that an offset amount in the vertical direction is c.

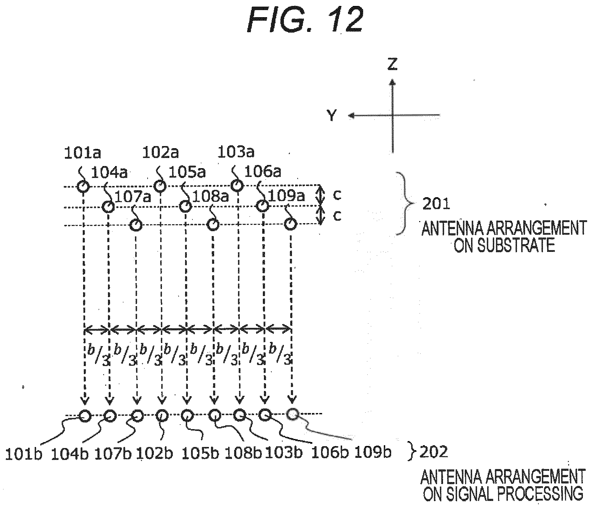

FIG. 12 is a schematic view illustrating a relationship between an arrangement 201 of each antenna element of the reception antenna 4 on a substrate and an arrangement 202 of each antenna element in the signal processing unit 7. Reference signs 101a to 109a indicate center positions of the antenna elements 101 to 109 illustrated in FIG. 11. The respective antenna elements are actually arranged as described above with reference to FIG. 11. However, the signal processing unit 7 treats positions of the antenna elements indicated by reference signs 101a to 109a as the arrangement order in which the antenna elements are arranged in a line in the horizontal direction as indicated by reference signs 101b to 109b, and calculates an arrival angle.

With the treatment as such an arrangement order, the reception antenna interval in the horizontal direction becomes an interval b/3, which is narrower than the actual antenna interval b, and an angle is widened at which a phase difference between reception antennas becomes 2n, that is, phase folding occurs, and a detectable visual field range of the radar can be widened.

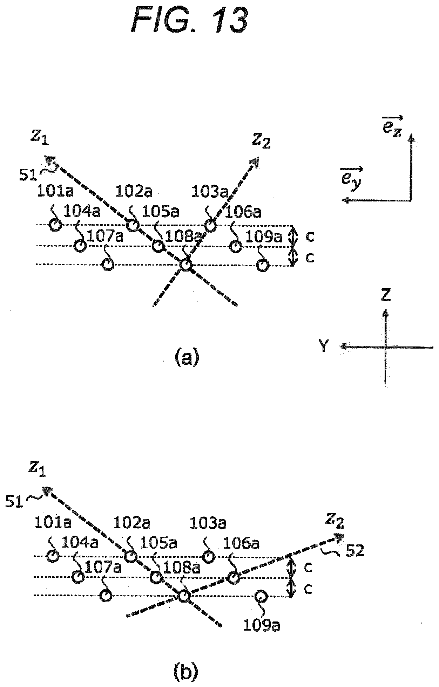

Note that the signal processing unit 7 may perform processing similar to the content described in the second embodiment, for example, after performing such rearrangement. For example, as illustrated in FIG. 13(a) or 13(b), an arrival angle in a predetermined direction can be correctly calculated by introducing the two oblique, axes 51 and 52 corresponding to the arrangement of the antenna elements of the reception antenna 4 and performing similar phase correction processing even when an arrival direction has a component in the Z direction orthogonal to the Y direction.

Note that the offset amounts of the respective sets of the antenna elements are not limited to the same value in the present embodiment as illustrated in FIG. 11, and, for example, different offset amounts may be set for the respective sets. Similarly, the antenna intervals in the horizontal direction are not limited to the same value, and may be unequal intervals. In addition, the number of antenna elements is not limited to nine elements illustrated in FIG. 11. These values may be freely designed within a scope not departing from the content of the present embodiment.

According to the third embodiment described above, the detectable visual field range of the radar can be expanded similarly to the first and second embodiments although the arrangement of the antenna elements is different between FIGS. 2 and 11.

-Fourth Embodiment-

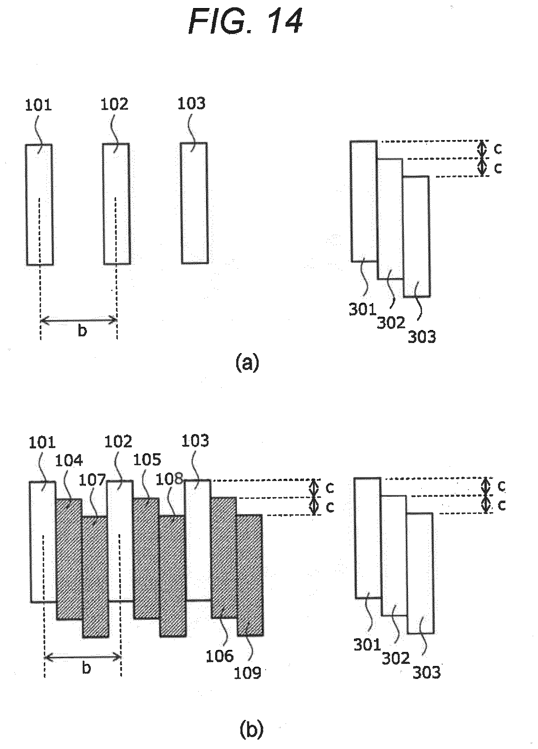

A radar device according to a fourth embodiment will be described with reference to FIG. 14. In the following description, a difference will mainly be described by applying the same reference signs to the same constituent elements as those of the first embodiment. A point not specifically described is the same as that of the first embodiment. The present embodiment is different from the first embodiment mainly in terms of using a virtual antenna.

In the embodiments that have been described so far, the antenna elements of the reception antenna 4 are all real antennas. In the present embodiment, a combination with a virtual antenna generated by multi-input multi-output (MIMO) may be provided. Components of the radar device in the present embodiment are similar to those illustrated in FIG. 1, but some elements of the respective antenna elements of the reception antenna 4 are configured using the virtual antennas by MIMO in the present embodiment.

FIG. 14(a) is a schematic view illustrating an arrangement of the antenna elements 101, 102, and 103 of the reception antenna 4 and antenna elements 301, 302, and 303 of the transmission antenna 3 in the present embodiment. As the transmission from the transmission antennas 301, 302, and 303 is switched in a time-series manner, virtual antennas 104 to 109 are generated as illustrated in FIG. 14(b). When such an antenna configuration is generated, an antenna configuration is equivalent to the antenna configuration described in the third embodiment, and the same effects as those of the third embodiment can be obtained.

According to the above-described fourth embodiment, the following operational effects can be obtained.

(6) Some of the plurality of antenna elements are virtual antennas generated by multi-input multi-output processing. Therefore, the number of actual antennas of the reception antenna 4 can be reduced, and thus, it is possible to streamline the radar device.

-Fifth Embodiment-

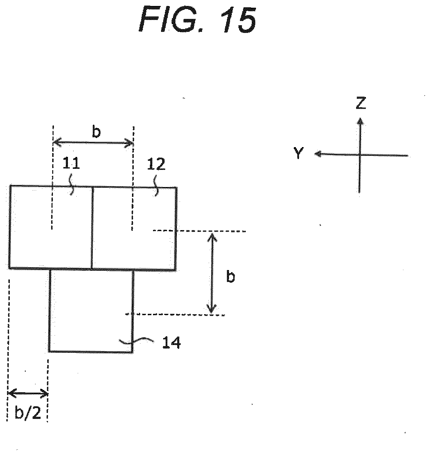

A radar device according to a fifth embodiment will be described with reference to FIG. 15. In the following description, a difference will mainly be described by applying the same reference signs to the same constituent elements as those of the first embodiment. A point not specifically described is the same as that of the first embodiment. The present embodiment is different from the first embodiment mainly in that the number of antenna elements is the minimum.

FIG. 15 is a view illustrating an arrangement of antenna elements according to the fifth embodiment. In the present embodiment, the number of antenna elements is three, and two antenna elements 11 and 12 have the same Z coordinate. The antenna element denoted by reference sign 14 is arranged to be offset by a half of an interval between the antenna elements denoted by reference signs 11 and 12. Therefore, an interval among the three antenna elements in the Y coordinate is b/2.

In all the above-described embodiments, the offset amount of each set of antenna elements is not limited to the same value (described as a in FIG. 2) as illustrated in FIG. 2, and for example, the offset amount may be different for each set. In addition, the antenna intervals in the horizontal direction are not limited to the same value (described as b in FIG. 2), and may be unequal intervals. The number of antenna elements is not limited to nine, either. These values may be freely designed within a scope not departing from the content of each of the embodiments.

In the above-described embodiments and modifications, the configurations of functional blocks are merely examples.

Some functional configurations illustrated as separate functional blocks may be integrally configured, or a configuration illustrated in one functional block diagram may be divided into two or more functions. In addition, some of the functions of each functional block may be included in another functional block.

Each of the embodiments and modifications described above may be combined. Although various embodiments and modifications have been described as above, the present invention is not limited to these contents. Other aspects that can be considered within the scope of the technical ideas of the present invention are also included in the scope of the present invention.

Reference Signs List

2    transmission unit
3    transmission antenna
4    reception antenna
5    reception unit
7    signal processing unit
10   radar device

**Claims**

1. A radar device comprising:

   an antenna array including a plurality of antenna elements; and
   a signal processing unit calculating an arrival angle of a reflection wave reflected by a detection target using reception signals of the plurality of antenna elements,
   wherein the plurality of antenna elements are disposed on a first plane including a first direction,
   at least one of the plurality of antenna elements is disposed at a position different from the other antenna elements in a second direction orthogonal to the first direction, and
   the signal processing unit arranges the reception signals of the plurality of antenna elements in order of positions of the plurality of antenna elements in the first direction to perform vectorization, and calculates a component of the arrival angle in the first direction.

2. The radar device according to claim 1, wherein
   the signal processing unit performs the vectorization by rearranging the order of the reception signals of the plurality of antenna elements based on a predetermined correspondence table.

3. The radar device according to claim 1, wherein
   the signal processing unit performs the vectorization by a hardware configuration created in advance.

4. The radar device according to claim 1, wherein
   the signal processing unit calculates a phase difference based on a difference between arrangement positions of the plurality of antenna elements in the second direction, and corrects the reception signal using the phase difference.

5. The radar device according to claim 1, wherein
   the signal processing unit calculates a phase difference based on a difference between arrangement positions of the plurality of antenna elements in a third direction oblique to the first direction on the first plane, and corrects the reception signal using the phase difference.

6. The radar device according to claim 1, further comprising

   a plurality of transmission antenna elements,
   wherein at least one antenna element included in the plurality of antenna elements is a virtual antenna generated by multi-input multi-output processing.

7. The radar device according to claim 1, wherein

   the plurality of antenna elements are classified into N (N is a natural number of two or more) groups,
   the antenna elements belonging to each of the groups are arranged at a first predetermined interval in the first direction,
   the groups have different positions in the second direction, and
   the groups are disposed to be offset by a distance obtained by dividing the first predetermined interval by N in the first direction.

# FIG. 1

# FIG. 2

# FIG. 3

h1=h2

(a)

(b)

# FIG. 4

| # | RECEPTION SIGNAL | REFERENCE SIGN OF ANTENNA ELEMENT |
|---|---|---|
| 1 | $x_1$ | 11 |
| 2 | $x_2$ | 14 |
| 3 | $x_3$ | 17 |
| 4 | $x_4$ | 12 |
| 5 | $x_5$ | 15 |
| 6 | $x_6$ | 18 |
| 7 | $x_7$ | 13 |
| 8 | $x_8$ | 16 |
| 9 | $x_9$ | 19 |

# FIG. 5

11a     12a     13a

b       b

14a     15a     16a

b

21   ANTENNA ARRANGEMENT
     ON SUBSTRATE

17a     18a     19a

b

Z

Y

a a a a a a a a

} 22   ANTENNA ARRANGEMENT
       ON SIGNAL PROCESSING

11b 14b 17b 12b 15b 18b 13b 16b 19b

# FIG. 6

```
                    ( Start )
                        │
                        ▼
    ┌───────────────────────────────────────┐
    │          RECEIVE SIGNAL FROM           │
    │   EACH RECEPTION ANTENNA ELEMENT       │──── S11
    └───────────────────────────────────────┘
                        │
                        ▼
    ┌───────────────────────────────────────┐
    │      REARRANGE ARRANGEMENT ORDER       │
    │  OF EACH RECEPTION ANTENNA ELEMENT     │──── S12
    │       IN PREDETERMINED DIRECTION       │
    │          ON SIGNAL PROCESSING          │
    └───────────────────────────────────────┘
                        │
                        ▼
    ┌───────────────────────────────────────┐
    │        CALCULATE ARRIVAL ANGLE IN      │
    │    PREDETERMINED DIRECTION UNDER       │──── S13
    │           ARRANGEMENT ORDER            │
    │          AFTER REARRANGEMENT           │
    └───────────────────────────────────────┘
                        │
                        ▼
                    ( End )
```

# FIG. 7

```
                  ( Start )
                      │
                      ▼
┌─────────────────────────────────────┐
│        RECEIVE SIGNAL FROM           │  ~ S11
│  EACH RECEPTION ANTENNA ELEMENT      │
└─────────────────────────────────────┘
                      │
                      ▼
┌─────────────────────────────────────┐
│     ACQUIRE PHASE INFORMATION OF     │  ~ S14
│         RECEPTION SIGNAL OF          │
│  EACH RECEPTION ANTENNA ELEMENT      │
└─────────────────────────────────────┘
                      │
                      ▼
┌─────────────────────────────────────┐
│    CALCULATE PHASE INFORMATION       │
│   IN DIRECTION ORTHOGONAL TO         │  ~ S15
│     PREDETERMINED DIRECTION          │
│   BASED ON PHASE INFORMATION         │
└─────────────────────────────────────┘
                      │
                      ▼
┌─────────────────────────────────────┐
│   REMOVE PHASE INFORMATION IN        │
│      DIRECTION ORTHOGONAL TO         │
│      PREDETERMINED DIRECTION         │  ~ S16
│    BASED ON RECEPTION SIGNAL OF      │
│  EACH RECEPTION ANTENNA ELEMENT      │
└─────────────────────────────────────┘
                      │
                      ▼
┌─────────────────────────────────────┐
│   REARRANGE ARRANGEMENT ORDER        │
│ OF EACH RECEPTION ANTENNA ELEMENT    │  ~ S12
│    IN PREDETERMINED DIRECTION        │
│       ON SIGNAL PROCESSING           │
└─────────────────────────────────────┘
                      │
                      ▼
┌─────────────────────────────────────┐
│   CALCULATE ARRIVAL ANGLE IN         │
│ PREDETERMINED DIRECTION UNDER        │  ~ S13
│       ARRANGEMENT ORDER              │
│      AFTER REARRANGEMENT             │
└─────────────────────────────────────┘
                      │
                      ▼
                  ( End )
```

# FIG. 8

# FIG. 9

(a)

(b)

# FIG. 10

$z$

$y \longleftarrow \bigotimes x$

11b  14b  17b  12b  15b  18b  13b  16b  19b

7b

$\times e^{-j\Delta\phi_z}$    $\times e^{-j\Delta\phi_z}$    $\times e^{-j\Delta\phi_z}$

$\times 1$    $\times 1$    $\times 1$

$\times e^{+j\Delta\phi_z}$    $\times e^{+j\Delta\phi_z}$    $\times e^{+j\Delta\phi_z}$

7c

ARRIVAL ANGLE CALCULATION PROCESSING UNIT

# FIG. 11

# FIG. 12

101a  102a  103a
104a  105a  106a
107a  108a  109a

C
C

201
ANTENNA ARRANGEMENT
ON SUBSTRATE

$b/3$ $b/3$ $b/3$ $b/3$ $b/3$ $b/3$ $b/3$ $b/3$

101b 104b 107b 102b 105b 108b 103b 106b 109b  } 202

ANTENNA ARRANGEMENT
ON SIGNAL PROCESSING

Z
Y

# FIG. 13

(a)

(b)

# FIG. 14

101    102    103

c
c

301 302
303

(a)

101    102    103
104    105
107    108

c
c

106
109

c
c

301 302
303

b

(b)

# FIG. 15

**INTERNATIONAL SEARCH REPORT**

International application No.

PCT/JP2020/019400

**A. CLASSIFICATION OF SUBJECT MATTER**

G01S 7/02(2006.01)i; G01S 7/03(2006.01)i; G08G 1/16(2006.01)i; H01Q 21/06(2006.01)i

FI: G01S7/02 218; G01S7/03 230; G08G1/16 C; H01Q21/06

According to International Patent Classification (IPC) or to both national classification and IPC

**B. FIELDS SEARCHED**

Minimum documentation searched (classification system followed by classification symbols)

G01S7/00-7/42, G01S13/00-13/95, G08G1/16, H01Q21/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | US 2014/0104097 A1 (BINZER, Thomas) 17.04.2014 (2014-04-17) paragraphs [0019]-[0024], fig. 1 | 1, 3, 6<br>2, 4-5, 7 |
| Y<br>A | JP 2009-115757 A (DENSO CORP.) 28.05.2009 (2009-05-28) paragraphs [0025]-[0055], fig. 1 | 1, 3, 6<br>2, 4-5, 7 |
| Y<br>A | JP 2019-71510 A (JAPAN RADIO CO., LTD.) 09.05.2019 (2019-05-09) paragraphs [0016]-[0019], fig. 1 | 6<br>2, 4-5, 7 |
| A | JP 2015-226291 A (TOYOTA MOTOR CORP.) 14.12.2015 (2015-12-14) paragraphs [0040]-[0063], fig. 7-10 | 1-7 |
| A | JP 2018-155678 A (MITSUBISHI ELECTRIC CORP.) 04.10.2018 (2018-10-04) paragraphs [0012]-[0035], fig. 1-3 | 1-7 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 August 2020 (12.08.2020) | 25 August 2020 (25.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

| INTERNATIONAL SEARCH REPORT | | International application No. | |
|---|---|---|---|
| Information on patent family members | | PCT/JP2020/019400 | |

| Patent Documents referred in the Report | Publication Date | Patent Family | Publication Date |
|---|---|---|---|
| US 2014/0104097 A1 | 17 Apr. 2014 | DE 102010064348 A1 WO 2012/089385 A1 CN 101430378 A | |
| JP 2009-115757 A | 28 May 2009 | US 2009/0121916 A1 paragraphs [0037]-[0074], fig. 1 DE 102008054228 A1 CN 101430378 A | |
| JP 2019-71510 A | 09 May 2019 | (Family: none) | |
| JP 2015-226291 A | 14 Dec. 2015 | (Family: none) | |
| JP 2018-155678 A | 04 Oct. 2018 | (Family: none) | |

**REFERENCES CITED IN THE DESCRIPTION**

**Patent documents cited in the description**

- JP 2004170371 A